# EUROPEAN PATENT SPECIFICATION

(11) **EP 1 699 611 B1**
(45) Date of publication and mention of the grant of the patent: **09.01.2008**
(21) Application number: 04820455.6
(22) Date of filing: 25.11.2004
(51) Int. Cl.: B29C 44/12, F16L 59/20, F16L 59/02, B29D 23/00

(54) **METHOD FOR MANUFACTURING AND HEAT-INSULATED PIPES FOR CONVEYING HOT OR COLD FLUIDS**
VERFAHREN ZUR HERSTELLUNG VON WÄRMEISOLIERTEN ROHREN UND ENTSPRECHENDE ROHRE ZUR BEFÖRDERUNG VON HEISSEN UND KALTEN FLUIDEN
PROCEDE POUR FABRIQUER DES TUYAUX CALORIFUGES ET TUBES CALORIFUGES POUR LE TRANSPORT DE FLUIDES CHAUDS OU FROIDS

(30) Priority: 18.12.2003 IT GE20030110
(43) Date of publication of application: 13.09.2006
(73) Proprietor: SOCOTHERM S.p.A., 36100 Vicenza (IT)
(72) Inventor: BERTI, Enrico, I-45011 ADRIA, Province of Rovigo (IT); VARAGNOLO, Roberto, I-30015 CHIOGGIA, Province of Venezia (IT); GUIDETTI, Gianpietro, I-44100 FERRARA (IT); ZANELLATO, Giorgio, I-45011 ADRIA, Province of Rovigo (IT); COCOLICCHIO, Alberto, I-45017 LOREO, Province of Rovigo (IT)
(74) Representative: Porsia, Attilio
(86) International application number: PCT/EP2004/053110
(87) International publication number: WO 2005/058573

(56) References cited:
- EP-A- 0 046 617
- WO-A-89/06595
- DE-A1- 3 534 241
- US-A- 3 394 207
- US-A- 6 058 979

## Description

The present invention relates to a method for manufacturing heat-insulated pipes comprising coaxial tubes for conveying hot/cold fluids and a pipe obtained by means of this method.

The conveying of hot/cold fluids normally takes place by means of pipes which are formed by joining together sections of thermally pre-insulated tubes and then rewelding the joints between the tubes after installing this piping on-site. These pipes consist essentially of an inner carrier tube, a layer of heat-insulating material and an outer casing tube. These thermally pre-insulated tubes may be made using a wide range of materials, both as regards the outer casing tube and the inner carrier tube.

For example, the carrier tube may be made of metal, fibreglass, plastic materials, rubber or the like, in the form of a single layer or also several composite layers of these materials. As regards the heat-insulating material, it is possible to use glass wool, expanded polyurethane (PU), expanded phenol resins, expanded thermoplastic materials (polystyrene, polyethylene, polypropylene, etc.), expanded rubbers, expanded calcium silicate, foamed glass and also syntactic foams which usually do not require outer coating in the form of a single layer or several composite layers. As regards the casing tube, it is possible to use as materials metal, fibreglass, thermoplastic and thermosetting materials, bituminous materials, rubber and the like.

For example, the pre-insulated pipes with coaxial tubes used in the oil, gas and distance-heating sectors are generally formed by an inner carrier tube made of steel, an outer casing tube made of steel or plastic materials, concentric with this carrier tube and coated so as to be corrosion-resistant, and heat-insulating material, generally expanded polyurethane, which fills the cylindrical cavity formed between the carrier tube and the casing tube.

The pre-insulated pipes normally used for conveying hot and cold fluids may be of two types. A first type is defined as "bonded" and has the characteristic feature that the internal heat-insulating material firmly adheres both to the outer surface of the carrier tube and to the inner surface of the casing tube, thus forming a one-piece pipe. In this first type of piping, the carrier tubes at the two free ends are longer than the casing tube and left free of insulating material so that they may be welded on-site. These exposed end sections of the carrier tube are then insulated and two steel half-jackets or a steel sleeve or a sleeve of plastic material are fixed on them in order to ensure the continuity of the casing tube. The welding operations required for recomposition of the casing tube with the two steel half-jackets, steel sleeve and sleeve made of plastic materials result in a significant amount of lost time and are very expensive from a cost point of view.

In a second type of pre-insulated pipe, the casing tube slides on the layer of heat-insulating material which surrounds the carrier tube in order to prevent the use of steel half-jackets, steel sleeve or sleeve made of plastic materials.

For manufacture of this second type of pre-insulated pipe and in particular for formation of the heat-insulating material between the sliding casing tube and the carrier tube, at present the following methods A, B and C are used:
A) Spraying of expanded polyurethane (PU), comprising the following steps:
   a) applying polyurethane components by means of spraying onto the carrier tube kept rotating;
   b) milling/smoothing the surface embossed with the expanded PU;
   c) coating the expanded PU by wrapping it with plastic tapes, fibreglass or an extruded thermoplastic strip. The final thickness of the insulating material plus its coating on the carrier tube must be such as to leave a certain amount of play with respect to the internal diameter of the casing tube so that they may be coupled together;
   d) introducing the insulated and coated carrier tube inside the casing tube;
   e) temporarily fixing together the carrier tube and the casing tube so that they may be handled and transported.
B) Casting of expanded PU, comprising the following steps:
   a) placing the carrier tube inside a mould so as to insulate it by means of casting with polyurethane components;
   b) removing the insulated carrier tube from the mould and coating the insulating material as per step c) in method A;
   c) introducing the insulated and coated carrier tube inside the casing tube;
   d) temporarily fixing together the carrier tube and the casing tube so that they may be handled and transported.
C) Jackets pre-made from heat-insulating material, comprising the following steps:
   a) mounting and fixing on the carrier tube jackets made of heat-insulating material (expanded PU, glass wool, calcium silicate, cellulose glass, cork, etc.) using suitable adhesive;
   b) coating the insulating material as in step c) of method A;
   c) and d) as in steps d) and e) of method A.

These methods A, B and C have various drawbacks: firstly the thickness of the cavity between the carrier tube and the casing tube is not wholly occupied by the heat-insulating material, but is partly used for the insulating material coating layer and is partly occupied by the play left between the insulated carrier tube and the casing tube and this play, which is useful for facilitating the step where the casing tube is mounted over the carrier tube, may reach values as high as 10-12 mm to the detriment of the heat insulating efficiency and the cold-down times: the operation of milling/smoothing the surface embossed with the expanded PU is very critical in that it is difficult to obtain uniform thicknesses of insulating material over the whole carrier tube; the need to mount on the carrier tube special rings for obtaining centring of the tubes at the ends and limit the camber of the carrier tube with respect to the casing tube, thus rendering critical the centring and parallel arrangement of the circumferences of the tube to be welded together; the need to temporarily fix together the carrier tube and casing tube so as to allow handling and transportation thereof.

From DE-A- 3534241 a method is known for the manufacture of heat insulated pipes comprising an outer casing tube and an inner coaxial carrier tube covered by suitable insulating sheets, for use in very cold environments, with temperatures in the order of -50°C. The problem with which said patent is concerned is to take up, in the insulation sheets covering the pipes, the great tensions generated by the great temperature differences between the very low temperature of the environment external to the outer casing tube and the temperature of the fluid flowing into inner carrier tube without that, due to different shrinkage factors, a tearing of the insulation sheets covering the pipes may take place. This problem is solved according to thid document by a method comprising the following steps:
- applying a separating agent onto the inner surface of the outer casing tube;
- fixing a series of spacers made of heat insulating material on the inner carrier tube;
- coupling and centering the outer casing tube on the inner carrier tube such as to form a cavity between them;
- Filling said cavity with a foamed resin.
   The present invention, instead, is concerned with a method for forming heat-insulated pipes of the kind "pipe in pipe" by the junction of single sections of pre-insulated pipes each formed by coaxial pipes sliding the one respect to the other on an insulating material with controlled friction in order to allow, whenever the pipeline is being formed in field by the junction of said single sections of pre-insulated pipes, the direct welding of said pipe sections thanks to the fact the insulation and the carrier pipe, and/or the insulation and the casing pipe may slide with controlled friction the one with respect to the other.

The main object of the present invention is therefore to provide a method for manufacturing heat-insulated pipes comprising coaxial tubes sliding relative to each other with controlled friction, which overcomes the drawbacks of the known methods cited above.

This object is achieved by the present invention by means of a method for manufacturing heat-insulated pipes comprising coaxial tubes for conveying hot/cold fluids, characterized by the following steps:
a) applying a film of non-adhesive and lubricating material onto the inner surface of a first outer casing tube and/or onto the outer surface of a second inner carrier tube;
b) fixing a series of spacers made of heat-insulating material onto the inner carrier tube;
c) coupling and centring the outer casing tube on the inner carrier tube so as to form a cavity between them;
d) mounting suitable sealing flanges on the ends of these tubes coupled together in accordance with step c);
e) heating in an oven the tubes provided with flanges and coupled together in accordance with steps c) and d);
f) supplying, via the flange or flanges and by suitable means, liquid resin which, as a result of subsequent expansion until it fills completely the cavity formed between these tubes coupled together in accordance with step c), forms the heat-insulating coating;
g) removing the flanges from the ends of these tubes coupled together, after suitable curing of the heat-insulating material.

A further object of the present invention is to provide a pipe for conveying hot and cold fluids, obtained with the present method and comprising an inner carrier tube, at least one layer of heat-insulating material and an outer casing tube fitted coaxially said carrier tube, characterized in that between the inner surface of said casing tube and the outer surface of the heat-insulating material and/or between the outer surface of said carrier tube and the inner surface of said heat-insulating material there is provided a film of non-adhesive and lubricating material able to achieve a condition of sliding with controlled friction between said heat-insulating material and the inner surface of the outer casing tube and/or between said heat-insulating material and the outer surface of said inner carrier tube. This sliding condition is obtained only by the action of an outer thrusting force greater than the frictional force created between the insulating material and the surface of the tube.

A further object of the present invention is to provide heat-insulated pipes comprising coaxial tubes sliding relative to each other with controlled friction, whereby in a first version (casing tube sliding on insulating materials) it is possible to perform, upon installation on-site, sliding of the casing tube on the insulating material and direct welding to that of the tube mounted previously and whereby in a second version (carrier tube sliding on insulating material) it is possible to perform, upon installation on-site, after welding of the carrier tube, sliding of the insulating material and casing tube on the carrier tube by means of extension of the cut-back zone previously left on the carrier tube as a result of welding, thus ensuring directly continuity of the heat insulation without having to specifically modify it.

A further object of the invention is to provide heat-insulating pipes comprising coaxial tubes sliding relative to each other, whereby, after installation on-site, said tubes may be fixed together by introducing resin between the contact surfaces of the insulating material and the tube or by heat-activating the non-adhesive film formed between insulating material and surface of the tube, so that it becomes adhesive.

Further objects and advantages of the present invention will be understood more clearly during the course of the following description, considered by way of a non-limiting example and with reference to the accompanying drawings in which:
- Fig. 1 shows a partial side elevation and longitudinally sectioned view of an inner carrier tube;
- Fig. 2 shows a partial side elevation and longitudinally sectioned view of an outer casing tube;
- Fig. 3 shows a front and cross-sectional view of the casing tube according to Fig. 2 coupled with the carrier tube according to Fig. 1;
- Fig. 4 shows a partial side elevation and longitudinally sectioned view of a step involving introduction of fluid heat-insulating material, according to the present method, into the cavity formed between the carrier tube and the casing tube according to Fig. 3; and
- Fig. 5 shows a partial side elevation and longitudinally sectioned view of a pipe for conveying hot/cold fluids obtained with the present method.

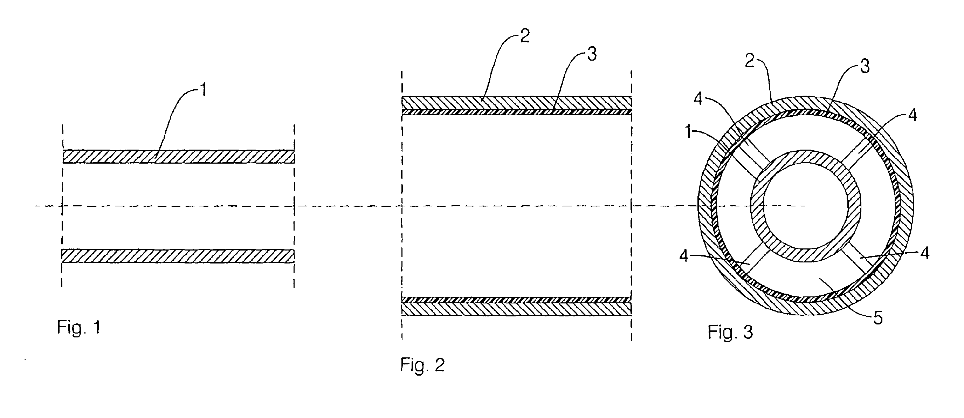

With reference to the accompanying drawings and in particular to Fig. 1 thereof, 1 denotes a carrier tube which may be made of various materials, such as metals, reinforced and non-reinforced thermoplastic and thermosetting materials, rubbers and the like, composite materials, etc.

Fig. 2 shows a casing tube 2 which has a diameter greater than the carrier tube 1 and which may be made of various materials, such as metals, reinforced and non-reinforced thermoplastic and thermosetting materials, rubbers and the like, composite materials, etc. According to a first step a) of the present method, the inner surface of this casing tube 2 is provided with a film 3 of non-adhesive and lubricating material. This film 3 is in reality fairly thin, but for obvious reasons of illustrative clarity, has been shown with a certain thickness. The non-adhesive and lubricating material of the film 3 may be of a varying nature: thermosetting and thermoplastic materials which may or may not be heat-activated, metallic films (aluminium or the like), thermosetting and thermoplastic films which may or may not be heat-activated, combined with metallic films, paper in ply form, glass fabrics and plastic fibres or plant fibres; separating/lubricating agents such as silicone, waxes, oils, fats, etc.

Fig. 3 shows the carrier tube 1 with, fixed on top in a radial direction, spacers 4 made of heat-insulating material, for example expanded polyurethane, in accordance with a step b) of the present method, so as to obtain precise centring upon coupling of the casing tube 2 with the carrier tube 1, in accordance with step c) of the present method. A cavity 5 is therefore formed between said casing tube 2 and carrier tube 1, in the space left between the spacers 4.

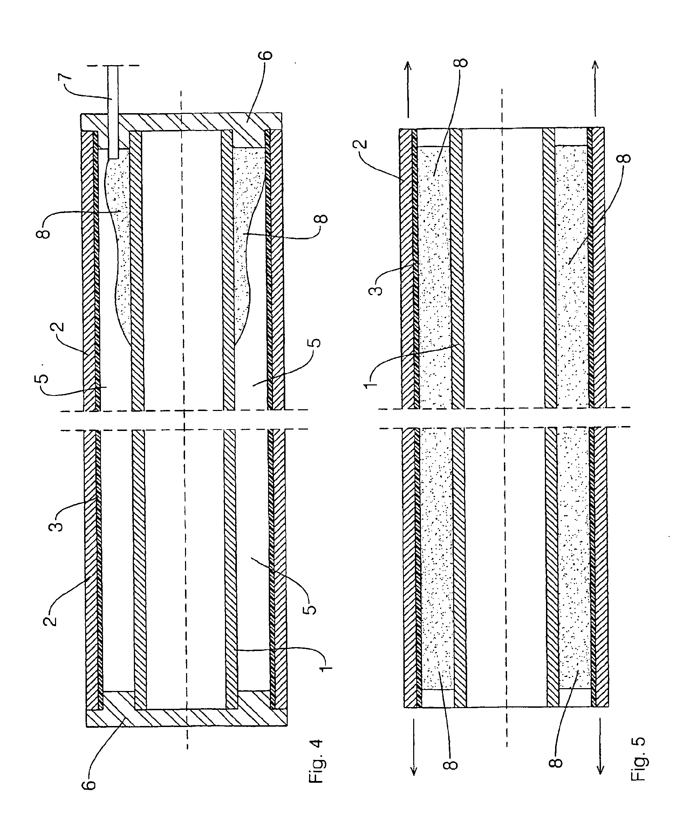

Fig. 4 shows laterally a pipe formed by two tubes, i.e. carrier tube 1 and casing tube 2, on the ends of which, in accordance with step d) of the present method, two sealing and centring flanges 6 are fixed. After mounting said sealing flanges 6, the pipe is placed in an oven in order to heat it, in accordance with a step e) of the present method, preferably at temperatures higher than 25°C. Via one or both said flanges 6, by means of a machine 7 supplying heat-insulating material 8 such as expanded PU, in accordance with a step f) of the present method, this liquid resin 8 is supplied inside the cavity 5 formed between said tubes 1 and 2 and, as a result of subsequent expansion until it completely fills the said cavity, forms the heat-insulating coating. Once this step f) of forming heat-insulating material 8 has been completed, said expanded material 8 is allowed to cure sufficiently and then the two end flanges 6 are removed, step g), obtaining a pipe (see Fig. 5) with the casing tube 2 sliding, owing to the film 3 of non-adhesive material, on the heat-insulating material 8 which surrounds the carrier tube 1, without advantageously leaving any play or gap between said heat-insulating material 8 and the casing tube 2.

Obviously, by envisaging the application of a film 3 of non-adhesive and lubricating material also on the outer surface of this carrier tube 1 in addition to or as an alternative to application of the film 3 on the inner surface of the casing tube, sliding of both the carrier and casing tubes 1 and 2 or of the carrier tube 1 alone on the heat-insulating material 8 is achieved.

As regards the insulating material 8 to be used in order to fill the cavity 5 between the carrier tube 1 and casing tube 2 coupled together, it is possible to use: glass wool and the like, expanded polyurethane, expanded epoxy resins, expanded phenol resins, expanded thermoplastic materials (polystyrene, polyethylene, polypropylene, polyvinyl chloride, polyethylene terephthalate, etc.), expanded rubbers, expanded calcium silicate, foamed glass, syntactic foams, etc.

As part of the heat-insulating material 8 it is also possible to use pre-formed jackets of insulating material in the form of one or more layers with the insulating materials which are kept under a vacuum and optionally combined with pre-formed containers containing state-changing materials as a heat source in order to prolong the cold-down, firmly adhering to the carrier tube and to each other. In this case, the carrier tube 1 thus coated will be coupled with the casing tube 2 and a cavity with a thickness less than that shown in the figures will be formed. Expanding resin will be introduced into this smaller-size cavity, as a heat insulator. In order to achieve sliding of the casing tube 2 on the carrier tube 1, this expanding resin will be prevented, as seen above, from adhering to the inner surface of said casing tube 2, by means of application of the film 3 of non-adhesive material.

This expanding resin between the carrier tube 1 and the casing tube 2 may be introduced into the cavity formed between them by means of known casting methods, such as: casting of the resin inside the cavity kept under ordinary pressure and corresponding overpacking of the expanding mass; introduction of the resin by conveying it on support band made to pass over the generatrices of the cavity; introduction of the resin by means of a supply head introduced into the cavity and supplying the material as it is retracted, or by means of innovative methods such as:
- expansion of the resin inside the cavity kept under a vacuum, resulting in the possibility of using expanding resins which have a limited sliding capacity and are very reactive, since the vacuum causes evaporation of the expanding agent and therefore rapid expansion of the resin without having to wait for raising of the temperature of the mass following the heat generated by the chemical reaction occurring with polymerization of the components of the resin which, as its progresses, tends to result in a mass which is increasingly viscous and with a limited sliding capacity;
- expansion of the resin inside the cavity by a special method based on a head for mixing the components of the resin which, once introduced into the cavity together with a special ring for guiding and centring the carrier tube and casing tube, ensures centring thereof during expansion of the resin without the use of conventional spacers. Mixing head and centring ring are integral with each other and kept at a distance such that the carrier tube does not bow and the whole assembly is retracted while the foaming mass is supplied and gradually fills the cavity and, solidifying, keeps the carrier tube in a centred position with respect to the casing tube. The resin mixing head and the centring ring may also be retracted stepwise with successive castings, so that the expanding resin fills each time the empty space between the head and the centring ring. With this system of successive castings, the tubes coupled together may be kept during casting in an inclined plane and also in a vertical plane;
- expansion of the resin introduced into the cavity as in the preceding method and keeping the carrier tube and casing tube coupled together rotating so as to ensure a homogeneous distribution of the foaming mass.

As it has been possible to establish from the above description, the advantages arising from use of a method for manufacturing heat-insulated pipes comprising coaxial tubes are numerous, as are the further variations of embodiment which may be adopted in order to obtain these advantages without departing from the scope of the accompanying claims.

## Claims

1. Method for manufacturing heat-insulated pipes of the kind "pipe in pipe" by junction of single sections of pre-insulated pipes each formed by coaxial pipes sliding the one in respect to the other on an insulating material with controlled friction in order to allow, whenever the pipeline is being formed in field by the junction of said single sections of pre-insulated pipes, the direct welding of said pipe sections, including the following steps:
a) applying a film (3) of non-adhesive and lubricating material onto the inner surface of a first outer casing tube (2) and/or onto the outer surface of a second inner carrier tube (1);
b) fixing a series of spacers (4) made of heat-insulating material onto the inner carrier tube (1);
c) coupling and centring the outer casing tube (2) on the inner carrier tube (1) so as to form a cavity (5) between them;
d) mounting suitable sealing flanges (6) on the ends of said tubes (1, 2) coupled together in accordance with step c);
e) heating in an oven the tubes (1, 2) provided with flanges (6) and coupled together in accordance with steps c) and d);
f) supplying, via the flange or flanges (6) and by suitable means (7), liquid resin which, as a result of subsequent expansion, fills completely the cavity (5) formed between said tubes (1, 2) coupled in accordance with step c);
g) removing the flanges (6) from the ends of said tubes (1, 2) coupled together, after suitable curing of the heat-insulating material.

2. Method according to Claim 1, **characterized in that** said carrier tube (1) is coated with pre-formed jackets of heat-insulating material in the form of one or more layers, there being formed between said carrier tube (1) and the casing tube (2) a cavity of limited width filled with insulating material (8) in accordance with step f).

3. Method according to Claim 1, **characterized in that** said pre-formed jackets comprising several layers are provided with insulating materials kept under a vacuum and optionally combined with pre-formed containers containing phase-changing materials, said layers firmly adhering to each other and to the carrier tube (1).

4. Pipe for conveying hot and cold fluids obtained with the method according to Claim 1 and comprising an inner carrier tube (1), at least one layer of heat-insulating material (8) and an outer casing tube (2) fitted coaxially on said carrier tube (1), **characterized in that** between the inner surface of said casing tube (2) and the outer surface of the heat-insulating material (8) and/or between the outer surface of said carrier tube (1) and the inner surface of said heat-insulating material (8) there is provided a film of non-adhesive and lubricating material (3) able to achieve a condition of sliding with controlled friction between said heat-insulating material (8) and the inner surface of the outer casing tube (2) and/or between said heat-insulating material (8) and the outer surface of said inner carrier tube (1).

5. Pipe according to Claim 4, **characterized in that** said carrier tube (1) is made of materials such as metals, reinforced and non-reinforced thermoplastic and thermosetting materials, rubbers and the like, composite materials, etc.

6. Pipe according to Claim 4, **characterized in that** said casing tube (2) is made of materials such as metals, reinforced and non-reinforced thermoplastic and thermosetting materials, rubbers and the like, composite materials, etc.

7. Pipe according to Claim 4, **characterized in that** said film (3) is based on non-adhesive materials such as thermosetting and thermoplastic materials which may or may not be heat-activated, metallic films (aluminium or the like), thermosetting and thermoplastic films which may or may not be heat-activated, combined with metallic films, paper in ply form, glass fabrics and plastic fibres or plant fibres; separating/lubricating agents such as silicone, waxes, oils, fats, etc.

8. Pipe according to Claim 4, **characterized in that** said heat-insulating material (8) introduced into the cavity (5) between said tubes during step f) is based on glass wool and the like, expanded polyurethane, expanded epoxy resins, expanded phenol resins, expanded thermoplastic materials (polystyrene, polyethylene, polypropylene, polyvinyl chloride, polyethylene terephthalate and the like), expanded rubbers, expanded calcium silicate, foamed glass, syntactic foams, etc.

9. Pipe according of any one of the preceding Claims 4 or 7, **characterized in that**, after installing the tube on-site, the condition of relative sliding of the two coaxial tubes may be eliminated by fixing them together by means of introduction of resin between insulating material and surface of the tube or by heat-activating the non-adhesive film formed between insulating material and surface of the tube, so that it becomes adhesive.

## Patentansprüche

1. Verfahren zur Herstellung von wärmeisolierten Rohren nach "Doppelrohr"-Art durch Verbindung von einzelnen Abschnitten von vorisolierten Rohren, die jeweils durch Koaxialrohre gebildet werden, welche gegeneinander auf einem isolierenden Material mit einer kontrollierten Reibung gleiten, um, wann immer die Rohrleitung vor Ort durch die Verbindung der einzelnen Abschnitte der vorisolierten Rohre gebildet wird, das direkte Schweißen dieser Rohrabschnitte zu ermöglichen, umfassend die folgenden Schritte:
a) Aufbringen eines Films (3) eines nicht adhäsiven und schmierenden Materials auf die innere Oberfläche eines ersten, äußeren Mantelrohrs (2) und/oder auf die äußere Oberfläche eines zweiten, inneren Trägerrohrs (1);
b) Befestigen eine Reihe von aus einem wärmeisolierenden Material hergestellten Abstandshaltern (4) auf das innere Trägerrohr (1);
c) Koppeln und Zentrieren des äußeren Mantelrohrs (2) am inneren Trägerrohr (1), so dass sich ein Hohlraum (5) zwischen ihnen bildet;
d) Anbringen von geeigneten dichtenden Flanschen (6) an den Enden der miteinander gemäß Schritt c) gekoppelten Rohre (1, 2);
e) Erwärmen der gemäß den Schritten c) und d) mit Flanschen (6) ausgestatteten und miteinander gekoppelten Rohre (1, 2) in einem Ofen;
f) Einbringen, über den Flansch oder die Flansche (6) und durch geeignete Mittel (7), von Flüssigharz, welches, als Ergebnis nachfolgender Ausdehnung, den zwischen den gemäß Schritt c) gekoppelten Rohren gebildeten Hohlraum (5) vollständig ausfüllt;
g) Entfernen der Flansche (6) von den Enden der miteinander gekoppelten Rohre (1, 2) nach angemessenem Aushärten des wärmeisolierenden Materials.

2. Verfahren nach Anspruch 1, **dadurch gekennzeichnet, dass** das Trägerrohr (1) mit vorgeformten Ummantelungen aus wärmeisolierendem Material in der Form von einer oder mehreren Schichten umhüllt wird, so dass zwischen dem Trägerrohr (1) und dem Mantelrohr (2) ein Hohlraum mit eingeschränkter Breite entsteht, welcher gemäß Schritt f) mit isolierendem Material (8) gefüllt wird.

3. Verfahren nach Anspruch 1, **dadurch gekennzeichnet, dass** die vorgeformten, mehrere Schichten umfassenden Ummantelungen mit isolierenden Materialien ausgestattet sind, die unter Vakuum gehalten werden und optional mit vorgeformten Behältern kombiniert werden, die Phasenumwandlungsmaterialien beinhalten, wobei die Schichten fest aneinander und an dem Trägerrohr (1) haften.

4. Rohr zur Beförderung von heißen und kalten Fluiden, welches für das Verfahren nach Anspruch 1 beschaffen ist und welches ein inneres Trägerrohr (1), wenigstens eine Schicht von wärmeisolierendem Material (8) und ein zum inneren Trägerrohr (1) koaxial ausgerichtetes, äußeres Mantelrohr (2) aufweist, **dadurch gekennzeichnet, dass** zwischen der inneren Oberfläche des Mantelrohrs (2) und der äußeren Oberfläche des wärmeisolierenden Materials (8) und/oder zwischen der äußeren Oberfläche des Trägerrohrs (1) und der inneren Oberfläche des wärmeisolierenden Materials (8) ein Film aus einem nicht adhäsiven und schmierendem Material (3) angeordnet ist, der es ermöglicht, die Voraussetzung eines Gleitens mit kontrollierter Reibung zwischen dem wärmeisolierenden Material (8) und der inneren Oberfläche des äußeren Mantelrohrs (2) und/oder zwischen dem wärmeisolierenden Material (8) und der äußeren Oberfläche des inneren Trägerrohrs (1) zu erreichen.

5. Rohr nach Anspruch 4, **dadurch gekennzeichnet, dass** das Trägerrohr (1) aus Materialien wie Metalle, verstärkte und nicht verstärkte thermoplastische und duroplastische Materialien, Gummis und dergleichen, Kompositmaterialien, usw. hergestellt ist.

6. Rohr nach Anspruch 4, **dadurch gekennzeichnet, dass** das Mantelrohr (2) aus Materialien wie Metalle, verstärkte und nicht verstärkte thermoplastische sowie duroplastische Materialien, Gummis und dergleichen, Kompositmaterialien, usw. hergestellt ist.

7. Rohr nach Anspruch 4, **dadurch gekennzeichnet, dass** der Film (3) auf nicht adhäsiven Materialien wie duroplastische und thermoplastische Materialien, die wärmeaktiviert oder nicht wärmeaktiviert sein können, metallische Filme (Aluminium und dergleichen), duroplastische und thermoplastische Filme, die wärmeaktiviert oder nicht wärmeaktiviert sein können, kombiniert mit metallischen Filmen, Papier in Lagenform, Glasgewebe und Kunststofffasern oder Pflanzenfasern; Trenn-/Schmiervermittler wie Silikon, Wachse, Öle, Fette, usw. basiert.

8. Rohr nach Anspruch 4, **dadurch gekennzeichnet, dass** das wärmeisolierende Material (8), welches während des Schritts f) in den Hohlraum (5) zwischen den Rohren eingeführt wird, auf Glaswolle und dergleichen, geschäumtes Polyurethan, geschäumte Epoxydharze, geschäumte Phenolharze, geschäumte thermoplastische Materialien (Polystyren, Polyethylen, Polypropylen, Polyvinylchlorid, Polyethylen-Terephthalat und dergleichen), geschäumte Gummis, geschäumtes Calziumsilikat, geschäumtes Glas, syntaktische Schäume, usw. basiert.

9. Rohr nach einem der vorhergehenden Ansprüche 4 oder 7, **dadurch gekennzeichnet, dass** nach dem Installieren des Rohres vor Ort die Voraussetzung des relativen Gleitens von den beiden koaxialen Rohren durch ein miteinander Fixieren mittels der Einführung von Harz zwischen isolierendem Material und Oberfläche des Rohres oder durch Wärmeaktivierung des nicht klebenden Filmes, gebildet zwischen dem isolierenden Material und der Oberfläche der Röhre, so dass er klebend wird, beseitigt werden kann.

## Revendications

1. Procédé de fabrication de tuyaux calorifugés du type "tuyau dans tuyau" par jonction de tronçons individuels de tuyaux pré-calorifugés formé chacun de tuyaux co-axiaux glissant l'un par rapport à l'autre sur un matériau isolant avec un frottement réglé afin de permettre, lorsque la ligne de tuyaux est formée sur champ par la jonction des tronçons individuels de tuyaux pré-calorifugés, le soudage direct des tronçons de tuyau, comprenant les stades suivants:
a) On applique un film (3) de matériau non adhésif et lubrifiant sur la surface intérieure d'un premier tube (2) extérieur d'enveloppe et /ou sur la surface extérieure d'un deuxième tube (1) intérieur de support;
b) on fixe une série d'entretoises (4)en matériau isolant thermiquement sur le tube (1) intérieur de support;
c) on couple et on centre le tube (2) extérieur d'enveloppe sur le tube (1) intérieur de support de manière à former une cavité (5) entre eux;
d) on monte des flasques (6) d'étanchéité appropriés sur les extrémités des tubes (1, 2) couplés ensemble suivant le stade c);
e) on chauffe dans un four les tubes (1, 2) munis de flasques (6) et couplés ensemble selon les stades c) et d);
f) on fournit par l'intermédiaire du flasque ou des flasques (6) et par des moyens (7) appropriés, de la résine liquide qui, en raison d'une expansion ultérieure, remplit complètement la cavité (5) formée entre les tubes (1, 2) couplés suivant le stade c);
g) on enlève les flasques (6) des extrémités des tubes (1, 2) couplés ensemble, après durcissement approprié du matériau isolant thermiquement.

2. Procédé suivant la revendication 1, **caractérisé en ce que** l'on revêt le tube (1) de support est revêtu de chemises préformées en matériaux isolants thermiquement sous la forme d'une ou de plusieurs couches, une cavité de largeur limitée et emplie de matériau (8) isolant suivant le stade f) étant formée entre le tube (1) de support et le tube (2) d'enveloppe.

3. Procédé suivant la revendication 1, **caractérisé en ce que** les chemises préformées comportant plusieurs couches sont prévues en ayant des matériaux isolants maintenus sous vide et combinées éventuellement avec des récipients préformés contenant des matériaux changement de phase, les couches adhérant solidement les unes aux autres et au tube (1) de support.

4. Tuyau pour transporter des fluides chauds et froids, obtenu selon le procédé suivant la revendication 1 et comprenant un tube (1) intérieur de support, au moins une couche de matériau (8) isolant thermiquement et un tube (2) extérieur d'enveloppe adapté co-axialement sur le tube (1) de support, **caractérisé en ce qu'**entre la surface intérieure du tube (2) d'enveloppe et la surface extérieure du matériau (8) isolant thermiquement et/ou entre la surface extérieure du tube (1) de support et la surface intérieure du matériau (8) isolant thermiquement il est prévu un film d'un matériau (3) non adhésif et lubrifiant apte à donner un état de glissement à frottement réglé entre le matériau (8) isolant thermiquement et la surface intérieure du tube (2) extérieur d'enveloppe et/ou entre le matériau (8) isolant thermiquement et la surface extérieure du tube (1) intérieure de support.

5. Tuyau suivant la revendication 4, **caractérisé en ce que** le tube (1) de support est en des matériaux tels que des métaux, des matières thermoplastiques et thermodurcissables renforcées et non renforcées, des caoutchoucs et analogues,des matériaux composites, etc.

6. Tuyau suivant la revendication 4, **caractérisé en ce que** le tube (2) d'enveloppe est en des matériaux tels que des métaux, des matières thermoplastiques et thermodurcissables renforcées et non renforcées, des caoutchoucs et analogues,des matériaux composites, etc.

7. Tuyau suivant la revendication 4, **caractérisé en ce que** le film (3) est à base de matériaux non adhésifs tels que des matières thermoplastiques et thermodurcissables qui peuvent ou non être activées à la chaleur, des films métalliques (aluminium ou analogue), des films thermodurcissables et thermoplastiques qui peuvent ou non être activés à la chaleur, combinés à des films métalliques, à du papier sous forme de jet, des tissus en verre et des fibres en matière plastique ou des fibres végétales, des agents de séparation/ lubrifiants tels que des silicones, des cires, des huiles, des graisses,etc.

8. Tuyau suivant la revendication 4, **caractérisé en ce que** le matériau (8) isolant thermiquement introduit dans la cavité (5) entre les tubes pendant le stade f) est à base de laine de verre et analogues, de polyuréthane expansé de résine époxy expansé, de résine phénolique expansée, de matières thermoplastiques expansées (polystyrène, polyéthylène polypropylène, poly(chlorure de vinyle), poly(téréphtalate d'éthylène) et analogues), de caoutchoucs expansés, de silicate de calcium expansé, de verre moussé, de mousses syntactiques, etc.

9. Tuyau suivant l'unes des revendications 4 ou 7 précédentes, **caractérisé en ce qu'**après avoir monté le tube sur site, on peut éliminer l'état de glissement relatif des deux tubes co-axiaux en les fixant ensemble au moyen de l'introduction de résine entre le matériau isolant et la surface du tube ou par activation à la chaleur du film non adhésif formé entre le matériau isolant à la surface du tube, de sorte qu'il devienne adhésif.
